# EUROPEAN PATENT APPLICATION

(11) **EP 2 511 320 A1**
(43) Date of publication of application: **17.10.2012**
(21) Application number: 12001932.8
(22) Date of filing: 20.03.2012
(51) Int. Cl.: C08G 63/18

(54) **Plastic film**

(30) Priority: 11.04.2011 JP 2011087628; 01.11.2011 JP 2011240455
(71) Applicant: Canon Kabushiki Kaisha, Tokyo (JP)
(72) Inventor: Matsuda, Katsuhiro, Tokyo (JP); Horie, Hitoshi, Tokyo (JP); Ito, Kenji, Tokyo (JP)
(74) Representative: Weser, Wolfgang

(57) **Abstract**

A plastic film contains, as a main component, a poly(alkylene-2,5-furandicarboxylate) and has a thickness of 1 mm or less. Even when the plastic film is used in a single layer without being laminated, the plastic film has excellent gas barrier properties against oxygen, carbon dioxide, and water vapor and excellent moisture resistance and corrosion resistance.

## Description

### Field of the Invention

The present invention relates to a plastic film.

### Description of the Related Art

It has been known that a resin having high gas barrier properties against oxygen and carbon dioxide does not always have sufficient gas barrier properties against water vapor. It has been known, on the other hand, that a resin having low gas barrier properties against oxygen and carbon dioxide has high gas barrier properties against water vapor. For example, an ethylene-vinyl alcohol copolymer has high gas barrier properties against oxygen and carbon dioxide, but has low gas barrier properties against water vapor. On the other hand, nylon 12 has low gas barrier properties against oxygen and carbon dioxide, but has high gas barrier properties against water vapor.

Among existing resins, polyethylene terephthalate (hereinafter, expressed as PET), which is a polyester resin, exhibits gas barrier properties against oxygen, carbon dioxide, and water vapor in a well-balanced manner. However, even PET, when it is used as a single-layer film, has insufficient gas barrier properties against oxygen, carbon dioxide, and water vapor. In order to improve the gas barrier properties, there has been proposed a method in which aluminum oxide or silicon oxide is vapor-deposited on a molded body or packaging container formed of PET or a method in which a resin having high gas barrier properties against water vapor and carbon dioxide compared with PET is applied or laminated onto a molded body (refer to Japanese Patent Laid-Open No. 2003-128121 [Patent Literature 1]).

Furthermore, there has been proposed a molded article formed of a polyester resin composed of a poly(alkylene-2,5-furandicarboxylate), and it has been described that since the molded article has excellent heat resistance, it can be applied in a variety of fields, such as manufacture of fibers and films (refer to Japanese Patent Laid-Open No. 2010-280767 [Patent Literature 2]).

Although Patent Literature 1 describes that gas barrier properties of a film are improved by providing a gas barrier layer and a metal layer, PET itself does not exhibit sufficient gas barrier properties when it is used in a single layer.

Patent Literature 2 does not describe that a film composed of a poly(alkylene-2,5-furandicarboxylate) has excellent gas barrier properties against oxygen, carbon dioxide, and water vapor, or does not describe the field of application.

### SUMMARY OF THE INVENTION

The present invention in its first aspect provides a plastic film as specified in claims 1 to 6. The present invention in its second aspect provides a plastic film as specified in claim 7. According to aspects of the present invention, even when the plastic film is used in a single layer without being laminated, the plastic film has excellent gas barrier properties against all of oxygen, carbon dioxide, and water vapor and excellent moisture resistance and corrosion resistance.

Further features of the present invention will become apparent from the following description of exemplary embodiments.

### DESCRIPTION OF THE EMBODIMENTS

A plastic film according to an embodiment contains, as a main component, a poly(alkylene-2,5-furandicarboxylate). The expression "containing as a main component" means that the content of the poly(alkylene-2,5-furandicarboxylate) in the plastic film is 60% by weight or more. The content of the poly(alkylene-2,5-furandicarboxylate) in the plastic film may be 80% or more, such as 90% or more.

The plastic film according to aspects of the present invention is a film which is developed taking into account the fact that a poly(alkylene-2,5-furandicarboxylate) has gas barrier properties and in which the properties are utilized. Therefore, the plastic film according to this embodiment can also be referred to as a gas barrier film.

The gas barrier film can be suitably used as a packaging material for packaging a volatile substance. Examples of the volatile substance include chemicals, such as ethers, and inks. Furthermore, since the gas barrier film does not easily transmit water vapor and oxygen from outside, it can be used as a packaging material for a substance which is degraded by oxidation or contact with water vapor.

The gas barrier film according to the embodiment can include a poly(alkylene-2,5-furandicarboxylate) layer alone.

A plastic film can be produced by subjecting a polymer containing a poly(alkylene-2,5-furandicarboxylate) (hereinafter, referred to as a "PAF-based polymer") to a common melt process, such as an extrusion process. Furthermore, in order to improve the strength and gas barrier properties of the plastic film, the resulting film can be subjected to simultaneous biaxial orientation or sequential biaxial orientation. Furthermore, a plastic film can be produced by a tubular process in which a tube obtained by extruding a PAF-based polymer into a cylindrical shape is subjected to simultaneous biaxial orientation. The molding temperature of the plastic film is appropriately set depending on the melting point of the resin used or the film-forming condition. After orientation, in order to improve the dimensional stability of the plastic film, the plastic film may be subjected to a heat treatment at a temperature that is higher than or equal to the glass transition temperature and lower than the melting point of the plastic film.

A single-layer plastic film according to the embodiment can be used as at least one layer in a multilayer plastic film. In this embodiment, the term "single layer" means that during or after molding of a plastic film, a plurality of layers are not formed by laminating another resin or vapor-depositing a metal oxide or the like.

The present inventors have found that, when a film is used as a packaging material for precision equipment, from the viewpoint of quality preservation, the oxygen transmission rate may be 10 × 10⁻¹⁴ mol/(m²·s·Pa) or less, the carbon dioxide gas transmission rate may be 50 × 10⁻¹⁴ mol/ (m² · s · Pa) or less, and the water vapor transmission rate may be 20 g/(m²·24hr) or less.

The precision equipment in the embodiment includes not only precision equipment but also precision equipment parts. According to aspects of the present invention, examples of the precision equipment include cameras, clocks and watches, copying machines, laser beam printers, inkjet printers, medical and measurement equipment, and semiconductor manufacturing equipment.

Furthermore, according to aspects of the present invention, examples of the precision equipment parts include toner cartridges for copying machines, toner cartridges for laser beam printers, ink cartridges for inkjet printers, and ink heads for inkjet printers. A packaging material for ink ejection heads for inkjet printers among these parts is particularly required to have gas barrier properties against oxygen, carbon dioxide, and water vapor, and therefore, the plastic film according to aspects of the present invention can be suitably used therefor.

In particular, since a packaging material for equipment is required to have strength, it may be the case that the packaging material has a shape that is resistant to strength.

The gas transmission coefficient is determined using the method described in JIS K 7126 and is equivalent to the gas transmission amount per unit thickness obtained by multiplying the gas transmission rate by the thickness of a test specimen. The gas transmission rate is defined as the volume of gas passing through unit area of a test specimen under unit partial pressure over unit time. When the gas is oxygen, the gas transmission coefficient is referred to as the oxygen transmission coefficient. Furthermore, when the gas is carbon dioxide, the gas transmission coefficient is referred to as the carbon dioxide gas transmission coefficient.

The water vapor transmission coefficient is determined using the method described in JIS Z 0208. In this embodiment, the water vapor transmission coefficient is equivalent to the transmission amount per 25 µm thickness calculated from the water vapor transmission rate which is the amount of water vapor passing through unit area of a test specimen over unit time under predetermined temperature and humidity conditions.

High gas barrier properties mean that the oxygen transmission coefficient, the carbon dioxide transmission coefficient, and the water vapor transmission coefficient are low.

The reason for the fact that the plastic film according to the embodiment has high gas barrier properties against oxygen, carbon dioxide, and water vapor is believed to be related to affinity between the passing gas and the structure of PAF. Because of high affinity between the furan ring contained in the PAF structure and oxygen, carbon dioxide, and water vapor, which are gases, it is believed that the gases do not easily pass through the plastic film, and thus the plastic film exhibits high gas barrier properties against oxygen, carbon dioxide, and water vapor.

In this embodiment, the PAF-based polymer includes a copolymer containing, as a main component, a poly(alkylene-2,5-furandicarboxylate) and a mixture. Regarding comonomers constituting the copolymer, examples of the dicarboxylic acid component include terephthalic acid and isophthalic acid, and examples of the diol component include ethylene glycol, propanediol, and butanediol.

The PAF-based polymer may have a number-average molecular weight (in terms of PMMA) in the range of 10,000 to 100,000. When the number-average molecular weight is less than 10,000, the tensile strength is low. When the number-average molecular weight exceeds 100,000, the melt viscosity is high, resulting in difficulty in film formation.

The thickness of the plastic film depends on the strength and gas barrier properties required for the molded body used and may be 1 mm or less, such as 5 to 1,000 µm, and even 5 to 250 µm. When the thickness is below this range, the strength of the plastic film is low. When the thickness is above this range, although sufficient strength can be obtained, lightweight properties and economic efficiency are poor.

A method of producing a PAF-based polymer used in this embodiment will now be described below. In a polymerization method for obtaining the PAF-based polymer, an acid of a derivative of 2,5-furandicarboxylic acid or the like and ethylene glycol or an alcohol, such as butanediol, are subjected to polycondensation.

In this embodiment, examples of the derivative of 2,5-furandicarboxylic acid that can be used include 2,5-furandicarboxylic acid, dimethyl 2,5-furandicarboxylate, diethyl 2,5-furandicarboxylate, and dipropyl 2,5-furandicarboxylate. These derivatives of 2,5-furandicarboxylic acid can be produced by a known method from biomass-derived substances, such as cellulose, glucose, and fructose, which are renewable sources.

As the polymerization method for producing the PAF-based polymer according to aspects of the present invention, a known method can be used, and examples thereof include melt polymerization, solution polymerization, bulk polymerization, suspension polymerization, and emulsion polymerization. The polymerization method is appropriately selected depending on the type of the molded article. The polymerization temperature, the polymerization catalyst, the medium, such as solvent, are appropriately selected depending on the polymerization method.

The reaction temperatures in the synthesis of the PAF-based polymer will be described below. The synthesis method of the PAF-based polymer includes an esterification step in which an acid of a derivative of 2,5-furandicarboxylic acid or the like and ethylene glycol or an alcohol, such as butanediol, are esterified in the presence of a catalyst to give an ester compound, and a polycondensation step of subjecting the resulting ester compound to a polycondensation reaction. The reaction temperature for esterification is 110°C to 200°C, such as 150°C to 180°C. The temperature for carrying out the polycondensation reaction is 180°C to 280°C, such as 180°C to 230°C.

The polycondensation step of the ester compound can be performed under vacuum. The reason for this is that in the polycondensation reaction, a diol is produced as a by-product, and by removing this, the polycondensation reaction rate is increased.

Catalysts used in the synthesis method of the PAF-based polymer will be described below. The synthesis of a polymer from a dicarboxylic acid and a diol proceeds even without adding a catalyst because of the autocatalysis of the dicarboxylic acid. However, since the concentration of the dicarboxylic acid decreases with the progress of polymerization, addition of a catalyst may be provided. In this embodiment, the synthesis of the PAF-based polymer includes an esterification step (hereinafter, referred to as a "first step") and a step of polycondensation by transesterification (hereinafter, referred to as a "second step"). Each step has a suitable catalyst.

Examples of the catalyst suitable for the first step of esterification include metal oxides, salts, organometal compounds of tin, lead, titanium, and the like, and tetravalent hafnium compounds, such as hafnium chloride (IV) and hafnium chloride (IV) · (THF)₂. Examples of the catalyst suitable for the second step of polycondensation by transesterification include acetates or carbonates of lead, zinc, manganese, calcium, cobalt, magnesium, and the like. In the second step, metal oxides of magnesium, zinc, lead, antimony, and the like or organometal compounds of tin, lead, titanium, and the like can also be suitably used. As the catalyst that is effective in both steps, a titanium alkoxide can be suitably used.

The catalysts may be added separately in the first step and the second step. Alternatively, the catalysts selected from the catalyst groups described above in any combination may be added to the furandicarboxylic acid and the diol from the initial stage of reaction. The catalysts may be added while heating the furandicarboxylic acid and the diol, and the catalysts selected from the catalyst groups described above in any combination may be added one or more times.

Furthermore, after the PAF-based polymer is obtained, solid-state polymerization may be performed by a known method.

Furthermore, another resin may be added to the PAF-based polymer to an extent that does not impair the characteristics of the plastic film. For example, a polyester resin, such as polylactic acid, polyethylene terephthalate, or polybutylene terephthalate, polycarbonate, or the like can be used. The amount of the other resin to be added may be 0 to 20 parts by weight relative to 100 parts by weight of the PAF-based polymer, such as 0 to 10 parts by weight, in view of gas barrier properties. The other resin may be one kind, or two or more kinds may be added in combination.

Furthermore, for the purpose of improving gas barrier properties of the plastic film, a layered inorganic compound, such as kaolin, talc, mica, or barite, may be added. Use of talc may be provided because the water vapor transmission coefficient can be decreased. In order to achieve both transparency and low water vapor transmission coefficient of the plastic film, the amount of the layered inorganic compound to be added may be 0.5% to 5% by weight relative to the plastic film.

In order to further improve the water vapor transmission coefficient, wax may be added. In view of handleability and the like of the plastic film, the amount of wax to be added may be 0.2% to 10% by weight, such as 0.3% to 5% by weight, relative to the plastic film.

As the wax, carnauba wax, candelilla wax, rice wax, olefin wax, or the like can be used. Among them, carnauba wax, candelilla wax, and rice wax may be provided.

Furthermore, in order to improve followability when the film is subjected to orientation, a plasticizer may be added. The plasticizer has an effect of forming a film free from defects, such as cracks and holes, during orientation of the film. As the plasticizer, a compound or a mixture of compounds selected from oxoacid ester derivatives and the like can be used. Specific examples thereof include methyl acetyl ricinolate, butyl acetyl ricinolate, and acetyl tributyl citrate.

In addition, an oxidation inhibitor, an ultraviolet stabilizer, a color protection agent, a delusterant, a deodorant, a flame retardant, a weathering stabilizer, an antistatic agent, a parting agent, an anti-oxidizing agent, an ion exchanger or a color pigment may be added to the plastic film according to aspects of the present invention within the range that does not impair the advantages according to aspects of the present invention.

### EXAMPLES

The technical scope of this embodiment is not limited to the examples below. The measurement and evaluation were performed using the methods and apparatuses described below.

### 1. Gas transmission test

The gas transmission test for each of oxygen and carbon dioxide was carried out on the basis of JIS K 7126-1, using gas chromatography and a differential pressure method.

### [Measurement conditions]

Test specimen shape: φ60, with the thickness being described in examples and comparative examples
Test gas: oxygen, carbon dioxide 3 levels
Test conditions: 23±2°C
Transmission area: 1.52 × 10⁻³ m² (φ4.4 × 10⁻² m)
Measurement apparatus: Differential pressure type gas/water vapor permeability measurement apparatus GTR-30XAD2, G2700T·F (manufactured by GTR Tec Corporation-Yanaco Technical Science Corporation)

### 2. Gas transmission test (water vapor) in accordance with JIS Z 0208

### [Measurement conditions]

Test specimen shape: φ60, with the thickness being described in examples and comparative examples
Testing atmosphere: 40°C, 90%RH
Transmission area: 28.26 cm²
Testing apparatus: Constant temperature and humidity chamber (manufactured by ESPEC Corp.)

### 3. Molecular weight measurement

Analytical instrument: Alliance 2695 manufactured by Waters Co.
Detector: Differential refractometer
Eluent: Hexafluoroisopropanol solution containing sodium trifluoroacetate at a concentration of 5 mM
Flow rate: 1.0 ml/min
Calibration curve: A calibration curve was prepared using a PMMA standard sample manufactured by Polymer Laboratories, Inc. to measure the molecular weight of PAF.
Column temperature: 40°C

### 4. Measurement of glass transition temperature (Tg), crystallization temperature (Tc), and melting point (Tm)

Apparatus name: Differential scanning calorimeter manufactured by TA Instruments
Pan: Platinum pan
Sample weight: 3 mg
Heating start temperature: 30°C
Heating rate: 10°C/min
Atmosphere: Nitrogen

### 5. Measurement of thermal decomposition temperature (Td)

In the measurement, the temperature at which 10% loss in weight was observed was defined as Td.
Apparatus name: Thermogravimetric analyzer manufactured by TA Instruments
Pan: Platinum pan
Sample weight: 3 mg
Heating start temperature: 30°C
Measurement mode: Dynamic rate method
Atmosphere: Nitrogen

The dynamic rate method is a measurement mode in which the heating rate is controlled in accordance with the degree of weight change to improve resolution.

### (Production Example 1) Synthesis of poly(butylene-2,5-furandicarboxylate)

A 1-L four-necked flask equipped with a nitrogen-introducing tube, a distilling tube-condenser, a thermometer, and a stainless steel stirring blade was prepared. Into the four-necked flask, 2,5-furandicarboxylic acid (2,300 g) and 1,4-butanediol (3,997 g; molar ratio = 1:3) together with a tin catalyst (0.059 wt%) and a titanium catalyst dissolved in toluene (0.059 wt%) were measured.

In the four-necked flask, stirring was started while introducing nitrogen, and the flask was immersed in an oil bath at 150°C to heat the content of the flask. When the inner temperature reached about 150°C, outflow of by-product water due to a condensation reaction started, and the temperature was raised to 170°C over about 4 hours.

The distilling tube was replaced with a distilling head, and pressure reduction was started. The inside of the flask was set to full vacuum (133 Pa) over about 3 hours, and the reaction was continued at 190°C for about 390 minutes under reduced pressure (133 Pa). As a result, 2,990 g of poly(butylene-2,5-furandicarboxylate) (hereinafter, expressed as "PBF") was obtained.

The resulting PBF had a number-average molecular weight of 63,000 in terms of poly(methyl methacrylate), Tm of 170°C, Tg of 31°C, Tc of 90°C, and a 10% weight loss thermal decomposition temperature of 338°C.

### (Production Example 2) Synthesis of poly(ethylene-2,5-furandicarboxylate)

A 1-L four-necked flask equipped with a nitrogen-introducing tube, a distilling tube-condenser, a thermometer, and a stainless steel stirring blade was prepared. Into the four-necked flask, 2,5-furandicarboxylic acid (2,300 g) and ethylene glycol (2,758 g; molar ratio = 1:3) together with a tin catalyst (0.05 wt%) and a titanium catalyst dissolved in toluene (0.05 wt%) were measured.

In the four-necked flask, stirring was started while introducing nitrogen, and the flask was immersed in an oil bath at 150°C to heat the content of the flask. When the inner temperature reached about 150°C, outflow of by-product water due to a condensation reaction started, and the temperature was raised to 230°C over about 4 hours.

The distilling tube was replaced with a distilling head, and pressure reduction was started. The inside of the flask was set to full vacuum (266 Pa) over about 3 hours, and the reaction was continued at 230°C for about 14 hours under reduced pressure (266 Pa). As a result, 2,375 g of poly(ethylene-2,5-furandicarboxylate) (hereinafter, expressed as "PEF") was obtained. The resulting PEF had a number-average molecular weight of 70,000 in terms of poly(methyl methacrylate), Tm of 200°C, Tg of 85°C, a crystallization temperature of 156°C, and a 10% weight loss thermal decomposition temperature of 360°C.

### EXAMPLE 1

The PBF with a number-average molecular weight of 63,000 obtained in Production Example 1 was predried for 8 hours in an over set at 120°C to remove moisture from the PBF. Then, the PBF was fed into a small T-die extruder (φ20 mm, cylinder temperature 170°C) and melted.

The molten PBF was extruded from a T-die provided on the tip of the extruder into the shape of a film, and thereby an unoriented film free from wrinkles, creases, and pinholes with a thickness of 82 µm was obtained. Next, a test specimen was cut from the unoriented film, and the gas transmission test with respect to oxygen and carbon dioxide according to JIS K 7126-1 and the gas transmission test with respect to water vapor according to JIS Z 0208 were performed.

### EXAMPLE 2

An experiment was performed as in Example 1 except that the PEF with a number-average molecular weight of 70,000 obtained in Production Example 2 was used, and the cylinder temperature of the small T-die extruder was changed to 220°C. Thereby, an unoriented film free from wrinkles, creases, and pinholes with a thickness of 119 µm was obtained.

Next, a test specimen was cut from the unoriented film, and the gas transmission test with respect to oxygen and carbon dioxide according to JIS K 7126-1 and the gas transmission test with respect to water vapor according to JIS Z 0208 were performed.

### EXAMPLE 3

100 Parts by weight of the PEF with a number-average molecular weight of 70,000 obtained in Production Example 2, 1 part by weight of carnauba wax (manufactured by Toakasei Co., Ltd.), 5 parts by weight of acetyl tributyl citrate (manufactured by Tokyo Chemical Industry Co., Ltd.), and 4 parts by weight of talc with a particle size of 7.0 µm (manufactured by Nippon Talc Co., Ltd.) were fed into a batch-type kneader.

The mixture was kneaded at a kneading temperature of 225°C for 5 minutes at 50 rpm to give a resin composition. The resulting resin composition was subjected to compression molding at a molding temperature of 225°C, a pressure of 50 kgf/cm², and a pressing time of 3 minutes and thereby molded into a sheet.

Then, using a pressure roll, the resulting sheet of the resin composition was formed into a film with a thickness of 76 µm at a roll temperature of 170°C, a haul-off speed of 0.17 m/min, and a roll gap of 100 µm.

A test specimen was cut from the resulting film of the resin composition, and the gas transmission test with respect to oxygen and carbon dioxide according to JIS K 7126-1 and the gas transmission test with respect to water vapor according to JIS Z 0208 were performed.

### EXAMPLE 4

100 Parts by weight of the PEF with a number-average molecular weight of 70,000 obtained in Production Example 2, 10 parts by weight of PLA (manufactured by Mitsui Chemicals, Inc.; trade name: LACEA H-100J), 1 part by weight of carnauba wax (manufactured by Toakasei Co., Ltd.), 5 parts by weight of acetyl tributyl citrate (manufactured by Tokyo Chemical Industry Co., Ltd.), and 4 parts by weight of talc with a particle size of 7.0 µm (manufactured by Nippon Talc Co., Ltd.) were fed into a batch-type kneader.

The mixture was kneaded at a kneading temperature of 225°C for 5 minutes at 50 rpm to give a resin composition. The resulting resin composition was subjected to compression molding at a molding temperature of 225°C, a pressure of 50 kgf/cm², and a pressing time of 3 minutes and thereby molded into a sheet.

Then, using a pressure roll, the resulting sheet of the resin composition was formed into a film with a thickness of 78 µm at a roll temperature of 170°C, a haul-off speed of 0.17 m/min, and a roll gap of 100 µm.

A test specimen was cut from the resulting film of the resin composition, and the gas transmission test with respect to oxygen and carbon dioxide according to JIS K 7126-1 and the gas transmission test with respect to water vapor according to JIS Z 0208 were performed.

### EXAMPLE 5

100 Parts by weight of the PEF with a number-average molecular weight of 70,000 obtained in Production Example 2, 10 parts by weight of polycarbonate (manufactured by Teijin Chemicals Ltd., trade name: Panlite L-1225L), 1 part by weight of carnauba wax (manufactured by Toakasei Co., Ltd.), 5 parts by weight of acetyl tributyl citrate (manufactured by Tokyo Chemical Industry Co., Ltd.), and 4 parts by weight of talc with a particle size of 7.0 µm (manufactured by Nippon Talc Co., Ltd.) were fed into a batch-type kneader. The mixture was kneaded at a kneading temperature of 250°C for 5 minutes at 50 rpm to give a resin composition. The resulting resin composition was subjected to compression molding at a molding temperature of 225°C, a pressure of 50 kgf/cm², and a pressing time of 3 minutes and thereby molded into a sheet. Then, using a pressure roll, the resulting sheet of the resin composition was formed into a film with a thickness of 69 µm at a roll temperature of 170°C, a haul-off speed of 0.17 m/min, and a roll gap of 100 µm.

A test specimen was cut from the resulting film of the resin composition, and the gas transmission test with respect to oxygen and carbon dioxide according to JIS K 7126-1 and the gas transmission test with respect to water vapor according to JIS Z 0208 were performed.

### EXAMPLE 6

100 Parts by weight of the PEF with a number-average molecular weight of 70,000 obtained in Production Example 2, 10 parts by weight of the PBF obtained in Production Example 1, 1 part by weight of carnauba wax (manufactured by Toakasei Co., Ltd.), 5 parts by weight of acetyl tributyl citrate (manufactured by Tokyo Chemical Industry Co., Ltd.), and 4 parts by weight of talc with a particle size of 7.0 µm (manufactured by Nippon Talc Co., Ltd.) were fed into a batch-type kneader.

The mixture was kneaded at a kneading temperature of 225°C for 5 minutes at 50 rpm to give a resin composition. The resulting resin composition was subjected to compression molding at a molding temperature of 225°C, a pressure of 50 kgf/cm², and a pressing time of 3 minutes and thereby molded into a sheet.

Then, using a pressure roll, the resulting sheet of the resin composition was formed into a film with a thickness of 62 µm at a roll temperature of 170°C, a haul-off speed of 0.17 m/min, and a roll gap of 100 µm.

A test specimen was cut from the resulting film of the resin composition, and the gas transmission test with respect to oxygen and carbon dioxide according to JIS K 7126-1 and the gas transmission test with respect to water vapor according to JIS Z 0208 were performed.

### COMPARATIVE EXAMPLE 1

An experiment was performed as in Example 3 except that polyethylene terephthalate (PET; manufactured by UNITIKA Ltd.; trade name: UNITIKA polyester resin NEH-2050) was used as the resin, and the cylinder temperature of the small T-die extruder was changed to 250°C. An unoriented PET film free from wrinkles, creases, and pinholes with a thickness of 76 µm was obtained.

Next, a test specimen was cut from the unoriented film, and the gas transmission test with respect to oxygen and carbon dioxide according to JIS K 7126-1 and the gas transmission test with respect to water vapor according to JIS Z 0208 were performed.

### COMPARATIVE EXAMPLE 2

An experiment was performed as in Example 3 except that polylactic acid (PLA; manufactured by Mitsui Chemicals, Inc.; LACEA H-100J) was used as the resin, and the cylinder temperature of the small T-die extruder was changed to 170°C. An unoriented PLA film free from wrinkles, creases, and pinholes with a thickness of 91 µm was obtained.

Next, a test specimen was cut from the unoriented film, and the gas transmission test with respect to oxygen and carbon dioxide according to JIS K 7126-1 and the gas transmission test with respect to water vapor according to JIS Z 0208 were performed.

Table 1 is a list of resin compositions, Table 2 shows gas transmission rates, and Table 3 shows gas transmission coefficients.

**TABLE 1**

| Name | Example 1 | Example 2 | Example 3 | Example 4 | Example 5 | Example 6 | Comparative Example 1 | Comparative Example 2 |
|---|---|---|---|---|---|---|---|---|
| PEF | - | 100 | 100 | 100 | 100 | 100 | - | - |
| Carnauba wax | - | - | 1 | 1 | 1 | 1 | - | - |
| Polylactic acid | - | - | - | 10 | | - | - | 100 |
| Polycarbonate | - | - | - | - | 10 | - | - | - |
| Polyethylene terephthalate | - | - | - | - | - | - | 100 | - |
| PBF | 100 | - | - | - | - | 10 | - | - |
| Acetyl tributyl citrate | - | - | 5 | 5 | 5 | 5 | - | - |
| Talc | - | - | 4 | 4 | 4 | 4 | - | - |

**TABLE 2**

| | Oxygen transmission rate | Carbon dioxide transmission rate | Water vapor transmission rate |
|---|---|---|---|
| | ×10⁻¹⁴mol/(m²·s·Pa) | ×10⁻¹⁴mol/(m²·s·Pa) | g/(m²·24hr) |
| Example 1 | 6.2 | 23.2 | 13.3 |
| Example 2 | 2.0 | 5.0 | 5.5 |
| Example 3 | 2.6 | 9.9 | 4.6 |
| Example 4 | 3.2 | 10.4 | 5.4 |
| Example 5 | 5.7 | 14.5 | 4.8 |
| Example 6 | 13.9 | 30.0 | 4.8 |
| Comparative Example 1 | 27.1 | 122.4 | 24.9 |
| Comparative Example 2 | 97.7 | 351.6 | 101.7 |

**TABLE 3**

| | Oxygen transmission coefficient | Carbon dioxide transmission coefficient | Water vapor transmission coefficient |
|---|---|---|---|
| | ×10⁻¹⁸mol·m/(m²·s·Pa) | ×10⁻¹⁸mol·m/(m²·s·Pa) | g·25µm/(m²·24hr) |
| Example 1 | 5.1 | 19.0 | 43.6 |
| Example 2 | 2.4 | 6.0 | 26.1 |
| Example 3 | 2.0 | 7.5 | 14.1 |
| Example 4 | 2.5 | 8.1 | 16.8 |
| Example 5 | 3.9 | 10.0 | 13.2 |
| Example 6 | 8.6 | 18.6 | 11.9 |
| Comparative Example 1 | 20.6 | 93.0 | 75.8 |
| Comparative Example 2 | 88.9 | 320.0 | 370.3 |

As is clear from the results described above, a plastic film composed of PBF and a plastic film composed of PEF each, without being laminated, exhibits excellent gas barrier properties against all of oxygen, carbon dioxide, and water vapor. Furthermore, these plastic films maintain excellent gas barrier properties even when polylactic acid, polycarbonate, wax, a plasticizer, or talc is added thereto. Consequently, when each of the plastic films is used as a packaging material for precision equipment, good moisture resistance and corrosion resistance are exhibited.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A plastic film comprising a poly(alkylene-2,5-furandicarboxylate) and having a thickness of 1 mm or less.

2. The plastic film according to Claim 1, wherein the poly(alkylene-2,5-furandicarboxylate) is poly(ethylene-2,5-furandicarboxylate) or poly(butylene-2,5-furandicarboxylate).

3. The plastic film according to Claim 1, further comprising at least one of polycarbonate and polylactic acid.

4. The plastic film according to Claim 1, wherein the poly(alkylene-2,5-furandicarboxylate) is synthesized from a biomass-derived substance.

5. The plastic film according to Claim 1, wherein the plastic film is used for packaging precision equipment.

6. The plastic film according to Claim 1, wherein the plastic film is used for packaging an ink ejection head for an inkjet printer.

7. A plastic film comprising a plurality of layers, at least one of the plurality of layers being the plastic film according to Claim 1.
